# EUROPEAN PATENT APPLICATION

(11) **EP 1 612 297 A2**
(43) Date of publication of application: **04.01.2006**
(21) Application number: 05012836.2
(22) Date of filing: 15.06.2005
(51) Int. Cl.: C25B 1/04, C01B 3/00

(54) **Hydrogen production process**

(30) Priority: 01.07.2004 US 584645 P; 02.06.2005 US 143177
(71) Applicant: Westinghouse Electric Company LLC, Pittsburgh, PA 15230-0355 (US)
(72) Inventor: Lahoda, Edward J., Pittsburgh, PA 15216-1352 (US); Goosen, John E., Harrison City, PA 15636 (US)
(74) Representative: Gallo, Wolfgang

(57) **Abstract**

A method for operating a hydrogen production process with reduced incidents of hydrogen explosions by separating a hydrogen production step from a heat source by locating the hydrogen production step and the hydrogen heat source a substantial distance apart. Costs are not significantly increased by the substantial distance due to the fact that elevated temperatures are not required for the hydrogen generation step, and therefore heat loss is not an issue during the transportation of reaction compounds across the distances.

## Description

### FIELD OF THE INVENTION

The present invention generally relates to a method for producing hydrogen for a variety of uses including transportation, chemicals manufacture and energy storage. Specifically, the invention relates to method for producing hydrogen that dramatically reduces the negative impacts of hydrogen explosions by isolating the hydrogen producing step from any excess heat or ignition source. The invention further relates to method for increasing the distance between a hydrogen producing step and at least one precursor step without substantially increasing the costs or reducing the efficiency of the method.

### BACKGROUND OF THE INVENTION

The production of hydrogen is a hazardous chemical process. Hydrogen is flammable, and the production of hydrogen presents a severe engineering and operational challenge to avoid the negative impact of potential hydrogen explosions. This challenge is even more pronounced when the procedure is used in conjunction with a nuclear power generation facility. The next generation nuclear plants will likely operate at high temperatures and thus be suitable for providing the high temperature process heat required by advanced hydrogen production processes. While hydrogen plants are designed to prevent any danger of explosion and nuclear plants are designed to withstand potential external dangers from events like explosions, licensing and safety analyses will require that designs that use the combination of these two types of facilities will include provisions that will preclude any type of negative interaction between the two facilities. In other words, an explosion at the hydrogen plant will not affect the operation and safety of the nuclear plant and visa versa. Thus, the design and construction of a system that efficiently produces hydrogen, especially in conjunction with a nuclear power generation facility, is a difficult procedure that takes a high degree of care.

As a result, capital and operating costs necessary for use of such a system are substantial. For example, the cost of permitting, licensing and operating a plant are exceedingly high. This is partially due to the fact that a typical licensing process for nuclear facilities restricts the proximity of neighboring facilities that could be the source of explosions. Moreover, as could be expected, insurance costs for operating such an arrangement are extreme.

The production of hydrogen from thermochemical cycles is a science that has been evolving over the past thirty years. Starting back in the mid-70's, a process using sulfuric acid was developed by Westinghouse (Pittsburgh, PA), hereinafter the Westinghouse Sulfur Process. This process used thermal energy from a nuclear High Temperature Gas Cooled Reactor (HTGR) such as the Pebble Bed Modular Reactor (PBMR) for the decomposition of sulfuric acid or sulfur trioxide to oxygen, water and sulfur dioxide at elevated temperatures. The sulfur dioxide released during the decomposition is absorbed in water at room temperature or lower or sent directly to form an electrolyzer. The sulfur dioxide is then reacted under electrolysis, which produces hydrogen and sulfuric acid in liquid form or sulfur trioxide in gaseous form. The hydrogen is then utilized for its intended purpose, and the sulfuric acid or sulfur trioxide is fed back into the high temperature process step where it is decomposed to sulfur dioxide and oxygen and water (if sulfuric acid). (Ref. Farbman, G. H. and Koump, V., "Hydrogen Generation Process-Final Report", FE-2262-15, Westinghouse Electric Corp., June 1977. and Farbman, G. H., "The Conceptual Design of an Integrated Nuclear-Hydrogen Production Plant Using the Sulfur Cycle Water Decomposition System," NASA CR-134976, Westinghouse Electric Corp., April 1976).

Thus, the Westinghouse Hydrogen Process utilizes a hydrogen production step wherein hydrogen is produced at a relatively low temperature step with electricity as the energy source. Temperature of this step is typically around 90°C. This is in contrast to other hydrogen production processes that utilize substantially higher temperatures for the hydrogen production step.

For example, another hydrogen production process that has been in existence for years is a Sulfur-Iodine process by General Atomics. The General Atomics process utilizes iodine and sulfur dioxide to produce sulfuric acid, which is then decomposed to oxygen, water and sulfur dioxide. The iodine process generally uses high temperature thermal energy from a nuclear reactor (~ 1000°C) for the decomposition of sulfuric acid. The process is continually repeated in the aim of producing intermediate HI by-products from the reaction. The process produces hydrogen from the intermediate HI products of the sulfuric acid decomposition by reacting them under elevated temperatures. This hydrogen producing step is typically done at about 400°C.

However, the above processes are typically preformed using methods that keep the hydrogen production step in proximity to the thermal energy requiring precursor steps, thereby potentially exposing produced hydrogen to negative impacts from thermal energy. Often the steps are separated by some kind of physical barrier. However, any breach in this barrier can potentially cause significant problems. Close proximity is economically required since the movement of large amounts of high temperature energy as heat over long distances requires very capital intensive equipment which still loses a significant amount of heat energy during transmission.

A more recent advance to the Westinghouse Hydrogen Process reduces the amount of heat necessary to decompose sulfuric acid. This process utilizes increased pressure during the oxygen recovery step, thereby creating two phases during the step. The lower, heavier phase, having SO2 dissolved in water, is sent to the electrolysis reactor. This results in a product after electrolysis that includes SO3, SO2, or a mixture of both. In any event, the energy required to evaporate the resulting liquid is reduced as excess water does not have to be evaporated.

Thus, there continually remains a need to reduce the costs and increase safety levels of hydrogen production processes, especially those wherein a nuclear power plant provides the thermal energy for the process.

### SUMMARY OF THE INVENTION

Accordingly, an object of the present invention is to provide a method for hydrogen production having a hydrogen producing step and at least one precursor step, wherein the at least one precursor step is performed at elevated temperatures and the hydrogen producing step is performed at temperatures between about 20 and 200°C, the hydrogen producing step separated from the at least one precursor step such that the elevated temperatures of the at least one precursor step have negligible impact on the hydrogen producing step.

It is a further object of the present invention to provide a method for hydrogen production wherein the hydrogen producing step is separated from the precursor step by a substantial distance

It is a further object of the present invention to provide a method for hydrogen production having a hydrogen producing step and at least one precursor step, wherein the at least one precursor step is performed at elevated temperatures derived from a nuclear reactor, and the hydrogen producing step is performed in an electrolyzer, the hydrogen producing step being separated from the at least one precursor step by a substantial distance.

### BRIEF DESCRIPTION OF THE DRAWINGS

FIG. 1 is a process flow diagram of a hydrogen production process.
FIG. 2 is a depiction of a hydrogen production process having a. substantial distance between the electrolyzing step and the other steps of the process.

### DETAILED DESCRIPTION OF THE PREFERRED EMBODIMENTS

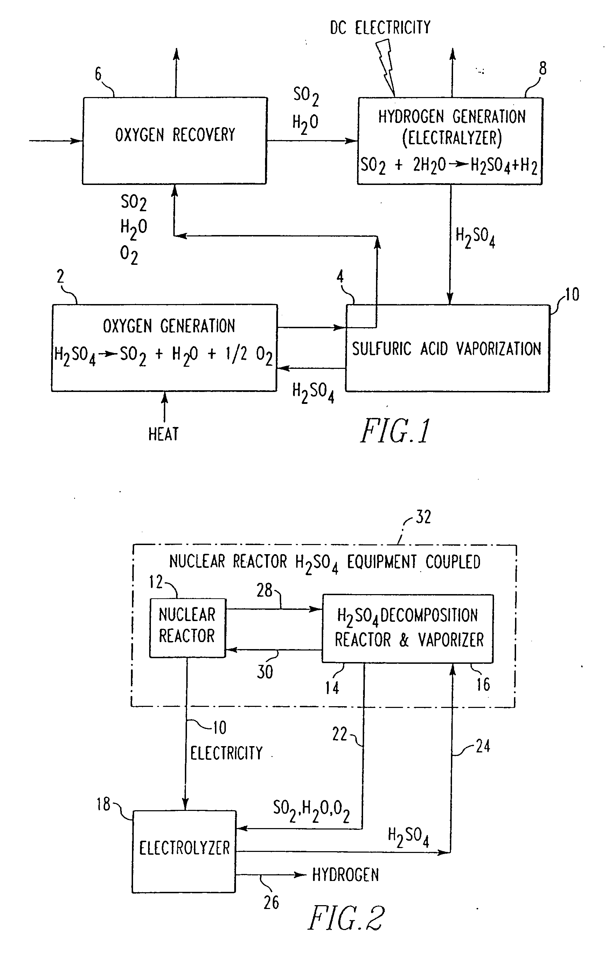

One embodiment of a hydrogen producing sulfur process, hereinafter the Westinghouse Sulfur Process, is shown in Figure 1. The Westinghouse Sulfur Process produces hydrogen during an electrolysis step wherein hydrogen is derived from sulfur dioxide and water. Energy necessary to drive the hydrogen production is derived from electricity. The process is unique among hydrogen production processes in that substantially elevated temperatures are not necessary during the actual hydrogen production step.

The process utilizes at least one precursor step to form the sulfur dioxide necessary for hydrogen generation. As shown in the first step under reference number 2, sulfuric acid or sulfur trioxide is decomposed into sulfur dioxide, water and oxygen at elevated temperatures during an oxygen generation step. The thermal energy required for this step is generally heat from a temperature above 800°C, preferably in the range of about 700 to 1100°C. The thermal energy may be provided by a generator, for example, a nuclear reactor. In additional embodiments, however, any other sources known in the art for thermal energy production in excess of 700°C may be used instead of a nuclear reactor. For example, fossil fuels such as coal or oil may be used to derive thermal energy to decompose the sulfuric acid. Similarly, gas or solar power may be used. Alternatively, a combination of two or more sources may be used.

The reaction for oxygen generation is:

H₂SO₄→H₂O+SO₃→H₂O+SO₂+0.5O₂.

In a preferred embodiment of the method of the invention, this step is carried out in concert with a High Temperature Gas Cooled Reactor (HTGR) such as the PBMR. In this environment, hot helium is sent through a first reactor to heat a bed of alumina or zirconia heat spheres with a catalytic surface. The catalyst is employed to make the decomposition reaction proceed more quickly to the equilibrium value predicted for the temperature. The helium heats up the first reactor to a desired temperature, and then is moved to a cold, second reactor to heat up the second reactor. In the now hot first reactor, sulfuric acid or sulfur trioxide is decomposed, gradually cooling the first reactor. Once the second reactor has been heated to the desired temperature, the hot helium is diverted back to the now cooled first reactor to reheat it. The sulfuric acid or sulfur trioxide steam is then diverted to the second reactor. The cycle can then repeat. In additional embodiments, more than two reactors can be used, the helium can be fed through a zeolite bed to remove residual sulfuric acid vapor, and/or other variances known in the art. Other decomposition reactor designs can be used including those indirectly heating the sulfuric acid or sulfur trioxide stream through a heat exchange tube.

The sulfur dioxide is cooled in a sulfuric acid or sulfur trioxide vaporizer in the second step, reference number 4. Thereafter, in reference number 6, the sulfur dioxide is absorbed in a counter current of water at a temperature above 40°F to remove 02 from the SO2. This is referred to as the oxygen recovery step. The system generally operates under increased pressures of about 200 to 1100 psi, preferably about 1000 psi, desirable to avoid the need to compress hydrogen product and to minimize process equipment size and capital cost. In alternate embodiments, the pressure of the system in step 3 is increased to above 1,100 psi, preferably between 1450 and 1700 psi, thereby allowing the sulfur dioxide to dissolve in water at higher temperatures or condense as a separate phase. This increases thermal efficiency by allowing dissolution of the SO2 in water at ambient temperatures without refrigeration. This alternate embodiment is shown and described in commonly owned U.S. Patent Application No. 11/054,235.

The sulfur dioxide in water is moved to a hydrogen production chamber where hydrogen is produced in a lower temperature step, reference number 8. In the present embodiment, the hydrogen production chamber is an electrolyzer, wherein the energy for the reaction is an electrical current. In this circumstance, direct current electricity of between about .17 and .6 volts is added to the electrolyzer, reacting the sulfur dioxide and thereby forming aqueous sulfuric acid and hydrogen. In alternate embodiments, however, the hydrogen production chamber can receive low temperature energy through other means, such as with a chemical process.

The reaction for the hydrogen producing step is:

SO₂+2H₂O→H₂SO₄+H₂.

The electrolysis step is performed at temperatures of about 20 to 200°C, preferably between about 30 and 70°C. The current deusity is about 200 ma/sq.cm at about 60°C. In contrast, the temperature at which hydrogen is potentially flammable is generally at a temperature of thousands of degrees Celsius or through an ignition source such as a spark. Thus, the temperatures of the electrolysis step are sufficiently low and are not potential ignition sources for the produced hydrogen. By design, electrolysis processes do not present spark sources. If a chemical process is used, the temperatures needed are similarly low and do not create ignition sources.

The aqueous sulfuric acid byproduct of the hydrogen production step is then vaporized into gaseous sulfuric acid in reference number 10, and thereafter fed back into the oxygen generation system of 2, repeating the cycle.

In alternate embodiments, the pressure can be increased in the electrolyzer or other apparatus to allow direct gas phase conversion of sulfurous acid (H₂SO₃) to sulfur trioxide and hydrogen, as shown and described in commonly owned U.S. Patent Application No. 11/054,235. As a result, for every mole of H₂ produced, only one mole of H₂O and one mole of SO₂ is required. The reaction for the hydrogen production step under this embodiment is:

SO₂+2H₂O→H₂SO₄+H₂.

The increased pressures of this reaction are preferably above 1100 psi, most preferably between 1450 and 1700 psi.

The method of one embodiment of the invention is shown in Figure 2. As can be seen, the distance of hydrogen producing electrolyzer 18 has been isolated from the heat producing steps of the hydrogen producing process, thereby isolating the electrolyzer from potential ignition sources. Specifically, the electrolyzer is isolated by substantially increasing the distance between the electrolyzer and potential ignition sources nuclear reactor 12, oxygen generator/H₂SO₄ decomposition reactor 14 and vaporizer 16, thereby dramatically reducing the explosion potential of the hydrogen. The isolation increases safety without substantially increasing cost, since heat loss over the substantial distance is immaterial. In addition, if there was to be an explosion in the hydrogen production plant, it is located far enough away so that it does not pose a safety hazard to the nuclear reactor through deflagration heat transfer or missiles. Note that while the decomposition reactor and the vaporizer and shown in this embodiment to be at the same location, in alternate embodiments they can be in different locations, assuming both are isolated from electrolyzer 18.

In this embodiment, hot helium is heated in the reactor 12 and sent through an elongated corridor 28 to the decomposition reactor 14 and vaporizer 16 to heat the oxygen generation step. The elongated corridor can be any type of transport known in the art, such as piping. The decomposition reactor and vaporizer perform the functions of reference numbers 2, 4 and 10 in Figure 1. Cooled helium returns through elongated corridor 30.

Electrolyzer 18 is an apparatus that utilizes electricity to break down or react compounds to form at least one new compound. The electricity may be created by the nuclear reactor and transported over a distance to the electrolyzer. In alternative embodiments, the method can use apparatuses other than an electrolyzer, for example, a chemical process reactor. The chemical process reactor utilizes chemical process to produce the energy required for the hydrogen forming step. The electrolyzer, chemical process reactor or other apparatus utilize energy that is not a potential ignition source and does not require elevated temperatures. The electrolyzer forms hydrogen as shown in Figure 1.

The distance of the electrolyzer from the reactor is a substantial distance, that is, of enough distance such that stray heat generated by the reactor would dissipate to harmless temperatures by the time it reaches the electrolyzer, thereby having a negligible effect. Alternatively, this distance needs to be far enough such that explosions in the hydrogen production facility do not impact the safety of operation of the nuclear plant through radiated heat, explosive shock waves or explosively generated missiles from hydrogen production equipment. The distance of the electrolyzer from the potential ignition sources is generally over 250 yards, preferably at least 400 yards. This distance effectively separates the potentially flammable hydrogen from any ignition source that may cause the hydrogen to explode. Moreover, since no heat is required by the process to be transferred across the distance, the distance can be great without having to account for the loss of heat over the distance's length. While the lower end of the distance should be far enough away to prevent possible ignition of the produced hydrogen, the upper end of the distance can essentially extend without limit without substantially increasing costs aside front the transportation costs of the compounds entering and leaving the electrolyzer.

The reactor and hydrogen production chamber may be separated by other means, for example, a physical barrier. Typically, the reactors will have a containment structure 32 around the perimeter of the reactors to prevent radioactive leaking. However, by isolating the hydrogen producing step by a substantial distance, the importance of the barrier, at least in terms of separating the hydrogen producing step form an ignition source, is lessened. Further, if the thermal energy source is produced by a non-radioactive source, the need to have a barrier around the reactor is lessened. A barrier can decrease the distance between the reactors and the hydrogen production chambers. However, since the present invention does not have substantial reduced costs if the distance is kept at a minimum, it is not a necessity.

Several elongated corridors, for example, piping or other means known in the art, connect the electrolyzer and the reactors that hold the precursor steps for the purpose of allowing compounds to move from one step to another. The electrolyzer 18 utilizes several elongated corridors, namely inlets 10 and 22 and outlets 24 and 26. Electricity, preferably generated from nuclear reactor 12, comes through inlet 10. O₂, H₂O and SO₂ enter the electrolyzer from the oxygen generation step through inlet 22. Compounds from inlet 22 generally go through oxygen recovery 6 prior to the electrolyzer. Sulfuric acid exits through outlet 24 into vaporizer 16 and then onto decomposition reactor 14 for thermal breakdown using thermal energy from a heat exchange with reactor 12. Hydrogen exits through outlet 26 and can be collected and/or used by any means known in the art. None of the compounds traveling through inlets 10 and 22 and outlet 24 are generally flammable, although SO₂ is flammable under extreme circumstances, and thus accidental reactions with hydrogen are severely limited.

Since the hydrogen formation electrolysis and oxygen recovery steps are performed at or close to ambient temperature, the inlets and outlets do not have to be heated or refrigerated. This substantially cuts down on initial capital and operating costs. The low temperature of the hydrogen forming process allows the material in the inlets and outlets to travel the long distances of the invention without substantial energy loss. If the hydrogen production process is heated, such as the General Atomic's Sulfur-Iodine process, operation costs increase due to energy loss in the pipe between the inlets and outlet, and/or capital costs increase due to the cost of insulating the pipe between the inlets and outlets. Thus, the method of the invention can dramatically increase the length of the elongated corridors without substantially increasing costs above the cost of the extra material required to lengthen the inlets and outlets.

While a full and complete description of the invention has been set forth in accordance with the dictates of the patent statutes, it should be understood that modifications can be resorted to without departing from the spirit hereof or the scope of the appended claims. For example, the structure housing the electrolyzer and reactors can vary widely while still maintaining the spirit of the invention.

## Claims

1. A method for hydrogen production having a hydrogen producing step and at least one precursor step, wherein the at least one precursor step is performed at elevated temperatures and the hydrogen producing step is performed at temperatures between about 20 and 200°C, the hydrogen producing step separated from the at least one precursor step such that the elevated temperatures of the at least one precursor step is sufficiently isolated from the hydrogen producing step so that the elevated temperatures of the precursor step cannot ignite the hydrogen.

2. The method of claim 1, wherein the hydrogen producing step is separated from the precursor step by a substantial distance.

3. A method for hydrogen production having a hydrogen producing step and at least one precursor step, wherein the at least one precursor step is performed at elevated temperatures and the hydrogen producing step is performed at temperatures between about 20 and 200°C the hydrogen producing step separated from the at least one precursor step by a substantial distance.

4. The method of claim 2 or 3, wherein the hydrogen producing step is separated from the precursor step by at least 400 yards.

5. The method of any of claims 1 to 4, wherein the hydrogen production step and the at least one precursor step are connected by elongated corridors.

6. The method of claim 1, wherein there is a thermal barrier between the at least one precursor step and the hydrogen producing step.

7. The method of any of claims 1 to 6, wherein the elevated temperatures of the at least one precursor step is above 700°C.

8. The method of any of claims 1 to 7, wherein the temperature of the hydrogen producing step is between about 30 and 70°C.

9. The method of any of claims 1 to 8, wherein the pressure of at least one precursor step is greater than 1000 psi.

10. The method of any of claims 1 to 9, wherein the hydrogen producing step utilizes electrolysis.

11. The method of any of claims 1 to 10, wherein the elevated temperatures of the at least one precursor step is derived from a nuclear reactor.

12. The method of any of claims 1 to 10, wherein the elevated temperatures of the at least one precursor step is derived from a fossil fuel.

13. A method for hydrogen production having a hydrogen producing step and at least one precursor step, wherein the at least one precursor step is performed wherein the elevated temperatures derived from a nuclear reactor, and the hydrogen producing step is performed in an electrolyzer, the hydrogen producing step separated from the at least one precursor step by a substantial distance.

14. The method of any of claims 1 to 13, wherein the hydrogen production step consists of the reaction SO₂ + 2H₂O → H₂SO₄ + H₂.

15. The method of claim 12, wherein the hydrogen production step consists of the reaction H₂O+SO₂ → H₂SO₄ + H₂+SO₃.

16. The method of claim 13, wherein the temperature of the hydrogen producing step is between about 20 and 200°C.
